# EUROPEAN PATENT SPECIFICATION

(11) **EP 3 520 303 B1**
(45) Date of publication and mention of the grant of the patent: **13.01.2021**
(21) Application number: 17784477.6
(22) Date of filing: 28.09.2017
(51) Int. Cl.: H04L 5/00

(54) **WIRELESS COMMUNICATION METHOD FOR TRANSMITTING REFERENCE SIGNAL RESOURCE INDICATION**
DRAHTLOSKOMMUNIKATIONSVERFAHREN ZUR ÜBERTRAGUNG EINER REFERENZSIGNALRESSOURCENANZEIGE
PROCÉDÉ DE COMMUNICATION SANS FIL POUR TRANSMETTRE UNE INDICATION DE RESSOURCE DE SIGNAL DE RÉFÉRENCE

(30) Priority: 28.09.2016 US 201662400984 P
(43) Date of publication of application: 07.08.2019
(73) Proprietor: NTT DOCOMO, INC., Chiyoda-ku Tokyo 100-6150 (JP); DOCOMO INNOVATIONS, INC., Palo Alto, CA 94304 (US)
(72) Inventor: KAKISHIMA, Yuichi, Tokyo 100-6150 (JP); NA, Chongning, Tokyo 100-6150 (JP); NAGATA, Satoshi, Tokyo 100-6150 (JP)
(74) Representative: Hoffmann Eitle
(86) International application number: PCT/US2017/054061
(87) International publication number: WO 2018/064361

(56) References cited:
- EP-A1- 3 021 608
- US-A1- 2016 227 519

## Description

### [Technical Field]

The present invention generally relates to a wireless communication method and, more particularly, to a method of multiplexing Channel State Information-Reference Signal (CSI-RS), Zero-Power (ZP) CSI-RS, and Interference Measurement Resource (IMR) resources in a wireless communication system.

### [Background Art]

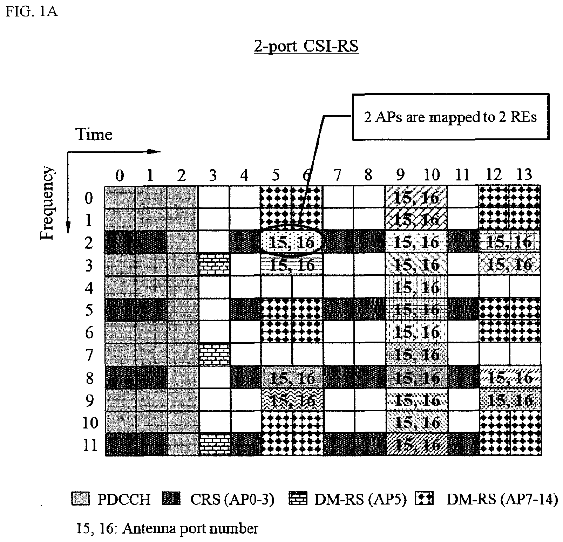

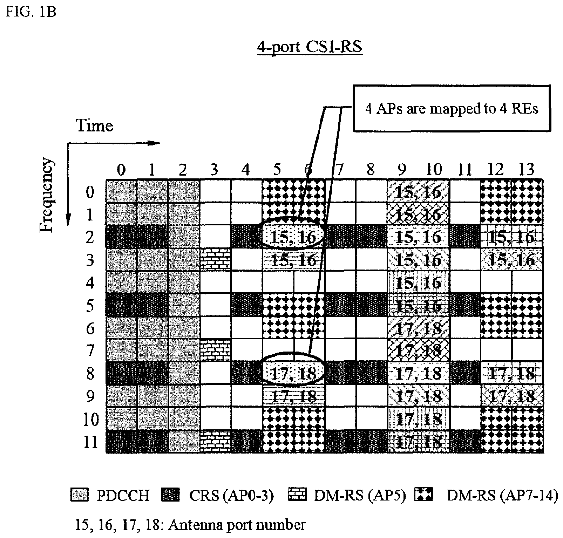

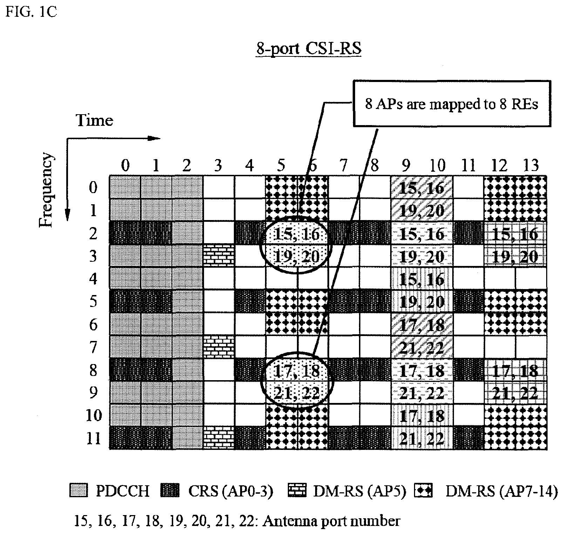

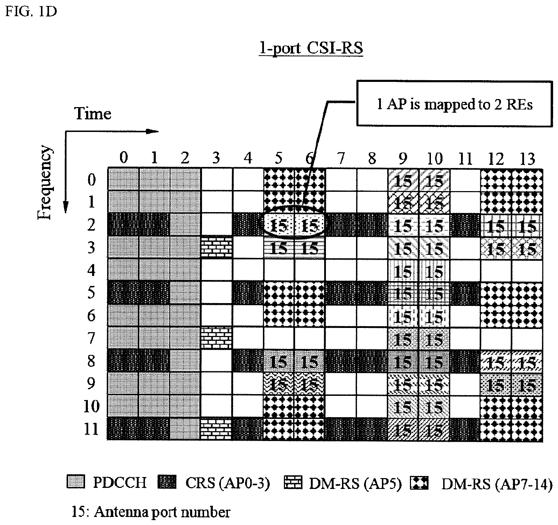

Long Term Evolution-Advanced (LTE-A) standard supports a Channel State Information-Reference Signal (CSI-RS) using up to 16 antenna ports (APs), which is a reference signal for downlink channel estimation. AP numbers "15" to "30" are used for CSI-RS transmission. FIGs. 1A, 1B, 1C, and 1D are diagrams showing resource elements (REs) mapped to 2, 4, 8, and 1-port CSI-RS, respectively, according to the conventional LTE standard. As shown in FIGs. 1A-1D, one axis designates a frequency domain and the other axis designates a time domain. Each block corresponds to the RE in a resource block (RB) and the hatched REs with the AP number are mapped to the APs for CSI-RS transmission. In 2, 4, 8, 12, and 16-port CSI-RS transmission, multiple CSI-RS resources are multiplexed using Frequency Division Multiplexing (FDM), Time Division Multiplexing (TDM), and Code Division Multiplexing (CDM) for power boosting. On the other hand, in 1-port CSI-RS transmission, multiple CSI-RS resources are multiplexed using FDM and TDM.

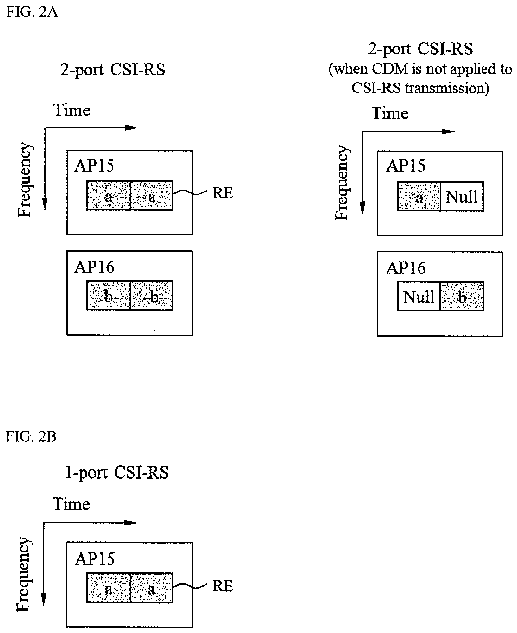

Furthermore, as shown in FIG. 1A, in the 2-port CSI-RS transmission, the AP numbers "15" and "16" are mapped to two REs. As shown in FIG. 1B, in the 4-port CSI-RS transmission, the AP numbers "15" to "18" are mapped to four REs. As shown in FIG. 1C, in the 8-port CSI-RS transmission, the AP numbers "15" to "22" are mapped to eight REs. Thus, in the 2, 4, and 8-port (and 12 and 16-port) CSI-RS transmission, resource density of the CSI-RS resource is one RE per AP for each RB (1RE/AP/RB). On the other hand, as shown in FIG. 1D, in the 1-port CSI-RS transmission, the AP number "15" is mapped to two REs. Thus, in the 1-port CSI-RS transmission, density of the CSI-RS resource is two REs per AP for each RB (2RE/AP/RB). FIGs. 2A and 2B are diagrams showing the REs mapped to each AP for 2 and 1-port CSI-RS transmission, respectively, according to the LTE-A standard.

As a result, the CSI-RS resource configuration of the 1-port CSI-RS under the conventional LTE standard may cause a large amount of CSI-RS overhead more than necessary. For example, transmission efficiency in the 1-port CSI-RS transmission using a beam selection-based precoding method may decrease, as described below.

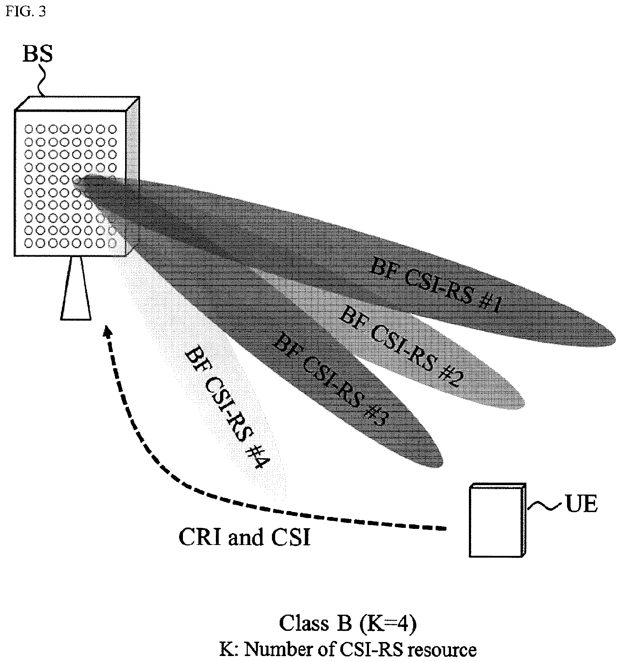

Release 13 LTE-A supports the beam selection-based precoding with Class B (k>1). "k" is the number of CSI-RS resources or beams. "Class" is also called "MIMO-Type." FIG. 3 shows an example operation of CSI feedback when "k" is 4. As shown in FIG. 3, a base station (BS) transmits four beamformed (BF) CSI-RSs. When a user equipment (UE) receives the BF CSI-RSs, the UE transmit an index (CSI-RS resource indicator (CRI)) for the most appropriate BF CSI-RS and CSI feedback information corresponding to the most appropriate BF CSI-RS to the BS. The BS can acquire angular information of transmission beams, but it may be sufficient to transmit BF CSI-RSs using the 1-port. However, as described above, the 1-port CSI-RS transmission may not be efficient because the resource density of the 1-port CSI-RS is doubled as the resource density of 2, 4, 8, 12, and 16-port CSI-RS.

Furthermore, the LTE-A standard supports a zero-power (ZP) CSI-RS scheme for high accurate CSI estimation. According to the ZP CSI-RS scheme, the RE(s) designated as the ZP CSI-RS is muted. This makes it possible to improve accuracy of the CSI estimation on the muted RE(s). For example, a non-zero-power (NZP) CSI-RS may be transmitted from a serving cell and CSI-RSs may not be transmitted from adjacent cells (the ZP CSI-RS may be applied in the adjacent cells). The conventional ZP CSI-RS may be notified using the REs mapped to the 4-port CSI-RS configurations. That is, the ZP CSI-RS resources can be designated only in a unit of four REs. As a result, Physical Downlink Shared Channel (PDSCH) transmission efficiency may decrease by designating the excessive ZP CSI-RS resources.

### [Citation List]

US 2016/227519 A1 discloses transmitting resource indication for Zero-Power Reference Signals (ZP RSs) and/or Interference Measurement Resources (IMR) in the form of a bitmap.

### [Non-Patent Reference]

[Non-Patent Reference 1] 3GPP, TS 36.211 V 13.2.0
[Non-Patent Reference 2] 3GPP, TS 36.213 V 13.2.0

### [Summary of the Invention]

The object of the invention is achieved by the subject-matter of the independent claims. The dependent claims describe advantageous embodiments.

### [Brief Description of the Drawings]

FIGs. 1A, 1B, 1C, and 1D are diagrams showing REs mapped to 2, 4, 8, and 1-port CSI-RS, respectively, according to conventional LTE standard.
FIGs. 2A and 2B are diagrams showing the REs mapped to each AP for 2 and 1-port CSI-RS transmission, respectively, according to the conventional LTE standard.
FIG. 3 is a diagram showing an example operation of beamformed CSI-RSs and CSI feedback according to the conventional LTE standard.
FIG. 4 is a diagram showing a configuration of a wireless communication system according to one or more embodiments of the present invention.
FIG. 5 is a diagram showing a resource configuration for 1-port CSI-RS transmission according to one or more embodiments of a first example of the present invention.
FIG. 6 is a sequence diagram showing an example operation for the 1-port CSI-RS transmission according to one or more embodiments of the first example of the present invention.
FIG. 7 is a diagram showing a resource configuration for 1-port CSI-RS transmission according to one or more embodiments of a modified first example of the present invention.
FIG. 8 is a diagram showing the REs mapped to the 1-port CSI-RS AP according to one or more embodiments of a second example of the present invention.
FIG. 9 is a sequence diagram showing an example operation for the 1-port CSI-RS transmission according to one or more embodiments of the second example of the present invention.
FIG. 10 is a diagram showing the REs mapped to the CSI-RS AP according to one or more embodiments of a third example of the present invention.
FIG. 11 is a sequence diagram showing an example operation for the CSI-RS transmission with low resource density according to one or more embodiments of the third example of the present invention.
FIG. 12 is a sequence diagram showing an example operation for the CSI-RS transmission with low resource density according to one or more embodiments of a fourth example of the present invention.
FIG. 13 is a sequence diagram showing an example operation for the CSI-RS transmission with low resource density according to one or more embodiments of a modified fourth example of the present invention.
FIG. 14 is a diagram showing a resource configuration for ZP CSI-RS resource according to one or more embodiments of a fifth example of the present invention.
FIG. 15 is a sequence diagram showing an example operation for notifying the UE of the ZP CSI-RS resource according to one or more embodiments of the fifth example of the present invention.
FIG. 16 is a block diagram showing a schematic configuration of a base station according to one or more embodiments of the present invention.
FIG. 17 is a block diagram showing a schematic configuration of a user equipment according to one or more embodiments of the present invention.

### [Detailed Description of Embodiments]

Embodiments of the present invention will be described in detail below, with reference to the drawings. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

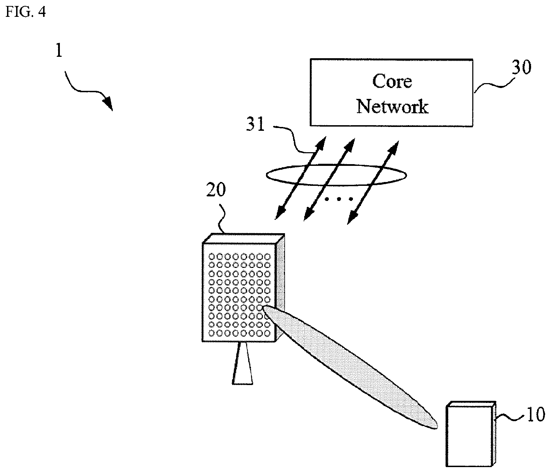

FIG. 4 illustrates a wireless communications system 1 according to one or more embodiments of the present invention. The wireless communication system 1 includes a user equipment (UE) 10, a base stations (BS) 20, and a core network 30. The wireless communication system 1 may be an LTE/LTE-Advanced (LTE-A) system, New Radio (NR), or other systems. The wireless communication system 1 is not limited to the specific configurations described herein and may be any type of wireless communication system.

The BS 20 may communicate uplink (UL) and downlink (DL) signals with the UE 10 in a cell 21. The DL and UL signals may include control information and user data. The BS 20 may communicate DL and UL signals with the core network 30 through backhaul links 31. The BS 20 may be Evolved NodeB (eNB).

The BS 20 includes one or more antennas, a communication interface to communicate with an adjacent BS 20 (for example, X2 interface), a communication interface to communicate with the core network 30 (for example, S1 interface), and a CPU (Central Processing Unit) such as a processor or a circuit to process transmitted and received signals with the UE 10. Operations of the BS 20 may be implemented by the processor processing or executing data and programs stored in a memory. However, the BS 20 is not limited to the hardware configuration set forth above and may be realized by other appropriate hardware configurations as understood by those of ordinary skill in the art. Numerous BSs 20 may be disposed so as to cover a broader service area of the wireless communication system 1.

The UE 10 may communicate DL and UL signals that include control information and user data with the BS 20. The UE 10 may be a mobile station, a smartphone, a cellular phone, a tablet, a mobile router, or information processing apparatus having a radio communication function such as a wearable device. The wireless communication system 1 may include one or more UEs 10.

The UE 10 includes a CPU such as a processor, a RAM (Random Access Memory), a flash memory, and a radio communication device to transmit/receive radio signals to/from the BS 20 and the UE 10. For example, operations of the UE 10 described below may be implemented by the CPU processing or executing data and programs stored in a memory. However, the UE 10 is not limited to the hardware configuration set forth above and may be configured with, e.g., a circuit to achieve the processing described below.

According to one or more embodiments of the present invention, the BS 20 may transmit a Channel State Information-Reference Signal (CSI-RS) (or CSI-RSs) using 1, 2, 4, 8, 12, or 16- antenna ports (APs). The number of APs is not limited to 1, 2, 4, 8, 12, and 16-port and may be more than 16-port such as 32-port. When the UE 10 receives the CSI-RS(s) from the BS 20, the UE 10 may transmit CSI feedback to the BS 20 in response to the CSI-RS(s).

In one or more embodiments of the present invention, a resource element (RE) may be an example of a resource.

In one or more embodiments of the present invention, the CSI-RS may be an example of a Reference Signal (RS).

### (First Example)

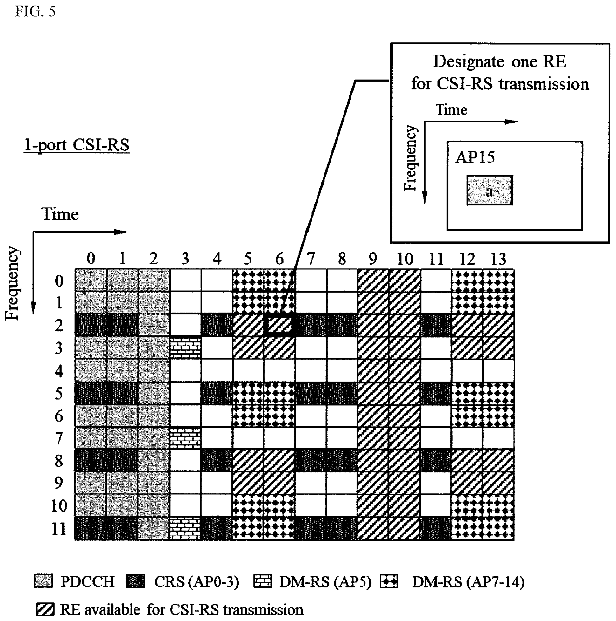

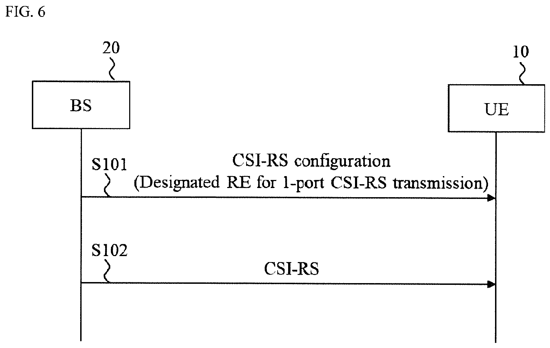

Embodiments of a first example of the present invention will be described below in detail with reference to FIGs. 5 and 6.

In the 2, 4, 8, 12, and 16-port CSI-RS under the conventional LTE-A standard, resource density of the CSI-RS resource is one RE per AP for each resource block (RB) (1RE/AP/RB). On the other hand, in the 1-port CSI-RS, density of the CSI-RS resource is two REs per AP for each RB (2RE/AP/RB). As a result, the 1-port CSI-RS transmission efficiency under the conventional LTE-A standard may be lower than the 2, 4, 8, 12, and 16-port CSI-RS transmission efficiency.

According to one or more embodiments of the first example of the present invention, in the 1-port CSI-RS transmission, a single RE may be used to the 1-port CSI-RS AP. As shown in FIG. 5, in one or more embodiments of the first example of the present invention, the resource density of the 1-port CSI-RS transmission may be one RE per AP for each RB (1RE/AP/RB) which is the same resource density as the 2, 4, 8, 12, and 16-port CSI-RS transmission. Thus, the BS 20 may designate one RE from 40 REs available for the CSI-RS transmission in the conventional LTE-A standard as the RE mapped to the 1-port CSI-RS AP.

As shown in FIG. 6, the BS 20 may designate one RE from 40 REs for the 1-port CSI-RS transmission and transmit CSI-RS configuration information indicating the designated RE to the UE 10 via Radio Resource Control (RRC) signaling or lower layer signaling (step S101). Then, the BS 20 may transmit the CSI-RS using the RE mapped to the 1-port CSI-RS AP (step S102). The UE 10 may receive the 1-port CSI-RS with the CSI-RS configuration size of one RE.

Thus, according to one or more embodiments of the first example of the present invention, the resource density of the 1-port CSI-RS transmission may be lower than the resource density in the conventional LTE-A standard. This makes it possible to decrease CSI-RS overhead. As a result, the 1-port CSI-RS transmission efficiency may be improved.

### (Modified First Example)

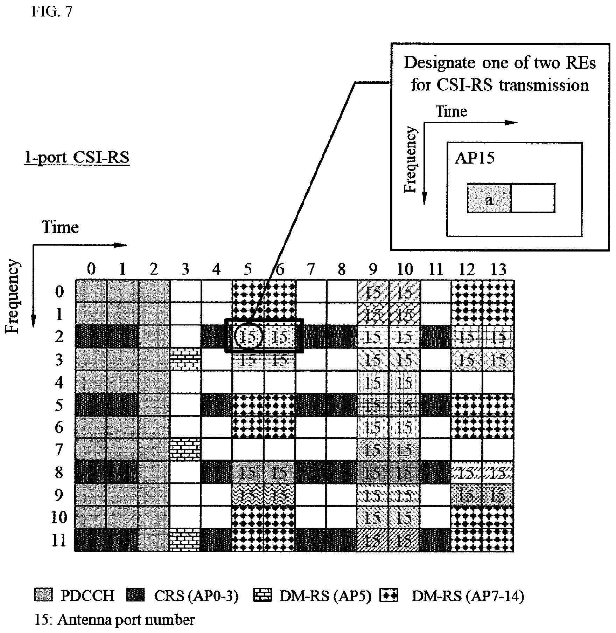

In a CSI-RS configuration under the conventional LTE-A standard, two REs mapped to the 1-port CSI-RS AP can be designated. According to one or more embodiments of a modified first example of the present invention, as shown in FIG. 7, the BS 20 may designate either one of the two REs mapped to the 1-port CSI-RS AP in the conventional CSI-RS configuration. The BS 20 may transmit information indicating the RE designated from the two REs which can be designated in the conventional CSI-RS configuration.

### (Second Example)

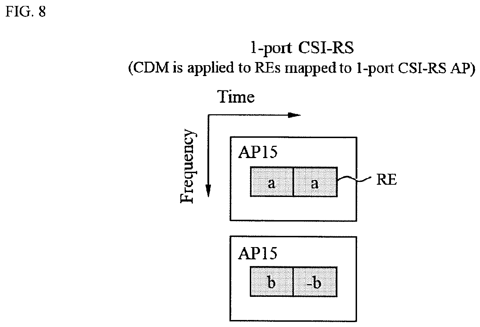

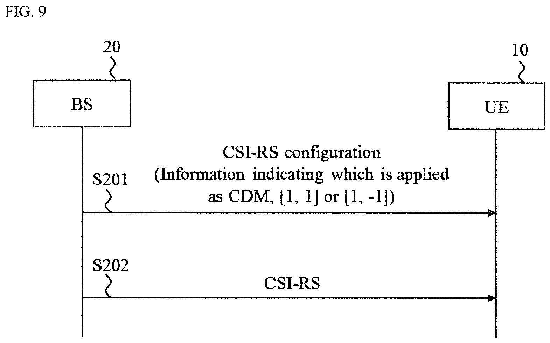

Embodiments of a second example of the present invention will be described below in detail with reference to FIGs. 8 and 9. In the conventional LTE-A standard, Code Division Multiplexing (CDM) is not applied to the REs for the 1-port CSI-RS transmission. According to one or more embodiments of a second example of the present invention, in the 1-port CSI-RS transmission, the CDM (Orthogonal Cover Code (OCC)) may be applied to the REs for the 1-port CSI-RS transmission.

In one or more embodiments of a second example of the present invention, as shown in FIG. 8, when the CDM is applied to the REs for the 1-port CSI-RS transmission, sequence length of the CDM (CDM length) may be two. For example, a set of "[a, a] ([1, 1])" or "[b, -b] ([1, -1])" may be applied to the two REs mapped to the 1-port CSI-RS transmission as the CDM.

As shown in FIG. 9, the BS 20 may apply the CDM to the REs mapped to the 1-port CSI-RS AP and transmit, to the UE 10, a CSI-RS configuration including information indicating which parameter is applied as the CDM, [1, 1] or [1, -1] (step S201). Then, the BS 20 may transmit the CSI-RS to which the CDM is applied, using the 1-port (step S202).

### (Third Example)

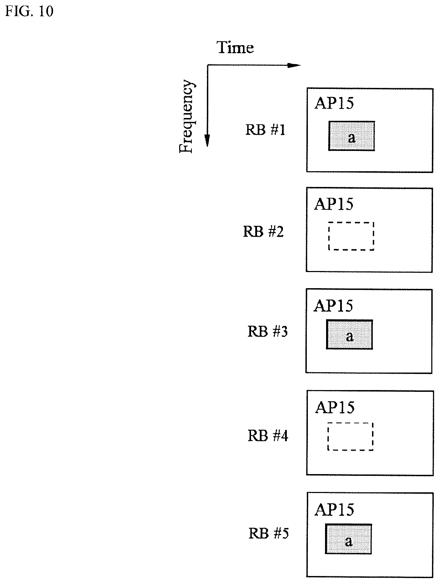

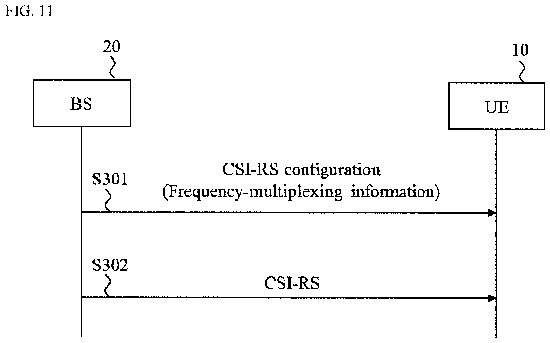

Embodiments of a third example of the present invention will be described below in detail with reference to FIGs. 10 and 11. According to one or more embodiments of the third example of the present invention, the CSI-RS resource for the 1-port CSI-RS transmission may be frequency-multiplexed (Frequency Division Multiplexing (FDM). For example, the RE(s) mapped to the 1-port CSI-RS AP, of which the RB number is either even or odd, may be frequency-multiplexed. In an example of FIG. 10, the RE mapped to the 1-port CSI-RS AP of each of the RBs of which the RB number is odd such as RB#1, #3, and #5 may be frequency-multiplexed. Furthermore, the RE of each of the RBs of which the RB number is even may be frequency-multiplexed.

As shown in FIG. 11, the BS 20 may transmit the CSI-RS configuration including frequency-multiplexing information indicating which REs are multiplexed via the RRC signaling (step S301). Then, the BS 20 may transmit the CSI-RS frequency-multiplexed to the UE 10 (step S302). The UE 10 may receive the 1-port CSI-RS with FDM in the unit of RB.

According to one or more embodiments of the third example of the present invention, the resource density for the CSI-RS transmission may decrease because the REs in the specific RB of which the RB number is either even or odd are frequency-multiplexed. This makes it possible to be the CSI-RS transmission efficiency can be improved.

Furthermore, the RE mapping method (CSI-RS transmission with the low frequency resource density) using the frequency multiplexing scheme according to one or more embodiments of the third example of the present invention may be applied to not only the 1-port CSI-RS transmission but also the CSI-RS transmission other than the 1-port CSI-RS transmission.

Furthermore, the RE mapping method using the frequency multiplexing scheme according to one or more embodiments of the third example of the present invention and the conventional RE mapping method may switched in the BS 20. For example, the BS 20 may notify the UE 10 of information indicating a switch of the CSI-RS transmission with the low resource density and the CSI-RS transmission under the conventional LTE-A standard using the RRC signaling.

### (Fourth Example)

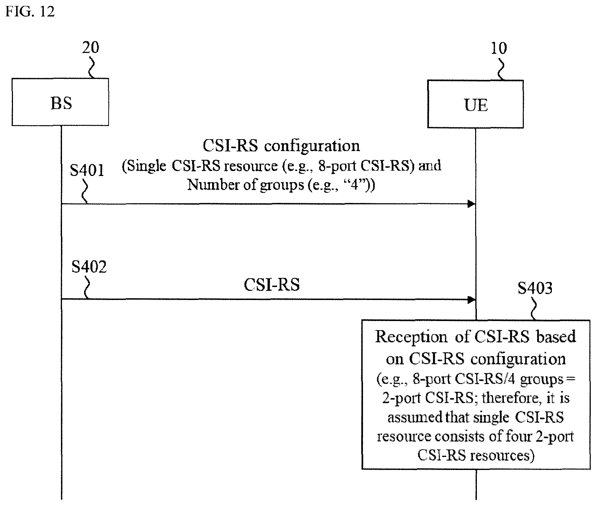

Embodiments of a fourth example of the present invention will be described below in detail with reference to FIG 12. According to one or more embodiments of the fourth example of the present invention, a single CSI-RS resource defined in the conventional LTE-A standard may be assumed as multiple CSI-RS resources.

For example, in one or more embodiments of the fourth example of the present invention, when the BS 20 may transmit the CSI-RS using the 8-ports, the 8-port CSI-RS resource may be assumed as the four 2-port CSI-RS resources. In this case, as shown in FIG. 12, the BS 20 may notify the UE 10 of the single CSI-RS resource (e.g., 8-port CSI-RS resource) and the number of groups (e.g., "4") via the RRC signaling (step S401). The number of groups is the number of the multiple CSI-RS resources constituting the single CSI-RS resource. Then, the BS 20 may transmit the CSI-RS (step S402).

The UE 10 may receive the CSI-RS based on the CSI-RS configuration including information indicating the single CSI-RS resource and the number of groups (step S403). For example, when the single CSI-RS resource is the 8-port CSI-RS resource and the number of groups is four, the UE 10 may assume the single CSI-RS resource consists of four 2-port CSI-RS resources. Thus, the multiple CSI-RS resources constituting the single CSI-RS resource may be reserved using the number of groups.

Furthermore, the RE mapping method using the frequency multiplexing scheme according to one or more embodiments of the fourth example of the present invention and the conventional RE mapping method may switched in the BS 20. For example, the BS 20 may notify the UE 10 of information indicating a switch of the CSI-RS transmission with the low resource density and the CSI-RS transmission under the conventional LTE-A standard using the RRC signaling.

According to one or more embodiments of a modified fourth example of the present invention, the multiple CSI-RS resources may be reserved based on information indicating the single CSI-RS resource and the number of APs for each of the groups.

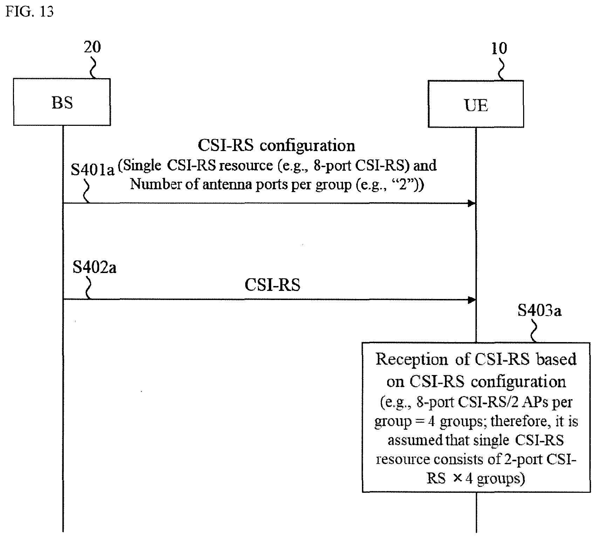

For example, in one or more embodiments of the modified fourth example of the present invention, when the BS 20 may transmit the CSI-RS using the 8-APs, the 8-port CSI-RS resource may be assumed as the four 2-port CSI-RS resources. In this case, as shown in FIG. 13, the BS 20 may notify the UE 10 of the single CSI-RS resource (e.g., 8-port CSI-RS resource) and the number of APs per group (e.g., "2") via the RRC signaling (step S401a). Then, the BS 20 may transmit the CSI-RS (step S402a).

The UE 10 may receive the CSI-RS based on the CSI-RS configuration including information indicating the single CSI-RS resource and the number of APs per group (step S403a). For example, when the single CSI-RS resource is the 8-port CSI-RS resource and the number of APs per group is two, the UE 10 may assume the single CSI-RS resource consists of four 2-port CSI-RS resources. Thus, the multiple CSI-RS resources constituting the single CSI-RS resource may be reserved using the number of APs per group.

### (Fifth Example)

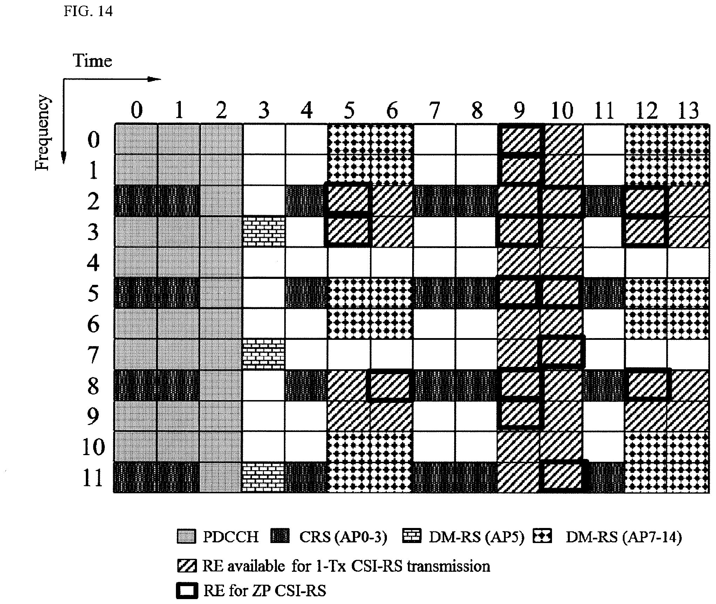

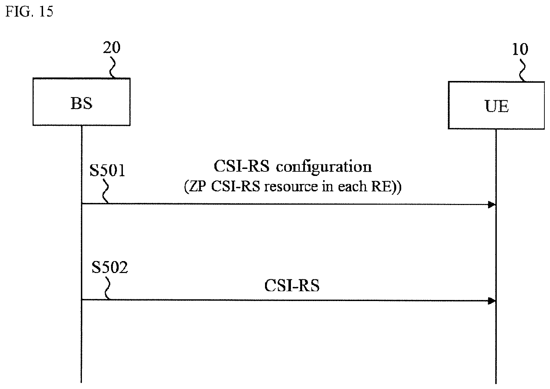

Embodiments of a fifth example of the present invention will be described below in detail with reference to FIGs 14 and 15.

The LTE-A standard supports a zero-power (ZP) CSI-RS scheme for high accurate CSI estimation. However, the conventional ZP CSI-RS may be notified using the REs mapped to the 4-port CSI-RS configurations. That is, the ZP CSI-RS resources can be designated only in a unit of four REs. As a result, Physical Downlink Shared Channel (PDSCH) transmission efficiency may decrease by designating the excessive ZP CSI-RS resources.

According to one or more embodiments of the fifth example of the present invention, the BS 20 may transmit, to the UE 10, information indicating a resource designated as a ZP CSI-RS (ZP RS) or an Interference Measurement Resource (IMR) dynamically. The UE 10 may receive the ZP RS or the IMR from the BS 10 using the information. In one or more embodiments of the fifth example of the present invention, the ZP CSI-RS resource may be designated in a unit of one RE. For example, the ZP CSI-RS resource in the unit of one RE may be notified based on a configuration of the REs mapped to the 1-port CSI-RS (low resource density like embodiments of the first example of the present invention). For example, as shown in FIG. 14, the ZP CSI-RS resource in each RE may be notified as bitmaps (bit-map format) based on the configuration of the RE mapped to the 1-port CSI-RS. In FIG. 14, the number of REs available for 1-port CSI-RS transmission is 40.

As shown in FIG. 15, the BS 20 may notify the UE 10 of the ZP CSI-RS resource in each RE based on the configuration of the RE mapped to the 1-port CSI-RS via the higher layer signaling such as the RRC signaling and/or the lower layer signaling using Downlink Control Information (DCI) or Media Access Control (MAC) Control Element (CE) (step S501). Then, the BS 20 may transmit the CSI-RS (step S502). For example, the RE used for the ZP CSI-RS may be switched using the higher layer signaling such as the RRC signaling and/or the lower layer signaling using DCI format.

As a result, according to one or more embodiments of the fifth example of the present invention, it may be advantageous to improve transmission efficiency of the PDSCH even if more ZP CSI-RSs are designated.

### (Modified Fifth Example)

According to one or more embodiments of a modified fifth example of the present invention, the ZP CIS-RS resource in a unit of two REs may be notified based on the REs mapped to the 2-port CSI-RS configurations. That is, ZP CSI-RS resource may be designated in a unit of two REs. The ZP CSI-RS resource may be indicated as a bit-map format. The ZP CSI-RS resource may be designated from 40 resources used in a 2-port CSI-RS mapping configuration where multiple CSI-RS resources are mapped to 2-antenna ports of the BS.

According to one or more embodiments of a modified fifth example of the present invention, a method for notifying the UE 10 of the conventional ZP CSI-RS resource (in a unit of four REs) and a method according to embodiments of the fifth example of the present invention may be switched using the higher layer signaling such as the RRC signaling and/or the lower layer signaling using DCI format.

According to one or more embodiments of a modified fifth example of the present invention, the ZP CSI-RS resource may be frequency-multiplexed. For example, in an example of FIG. 10, when the RE "a" is designated as the ZP CSI-RS (or the IMR), part of a plurality of RBs (RBs #1, #3, and #5) may be frequency-multiplexed. The RE "a" designated as the ZP CSI-RS may be the ZP CSI-RS resource. For example, the RB number of the part of a plurality of RBs including the ZP CSI-RS resources may be either even or odd. Furthermore, the frequency-multiplexing information indicating the part of a plurality of RBs including the ZP CSI-RS resources may be notified from the BS to the UE via the RRC signaling.

As another example, the ZP CSI-RS resource according to embodiments of the fifth example of the present invention may be used as an interference measurement resource (IMR).

### (Configuration of Base Station)

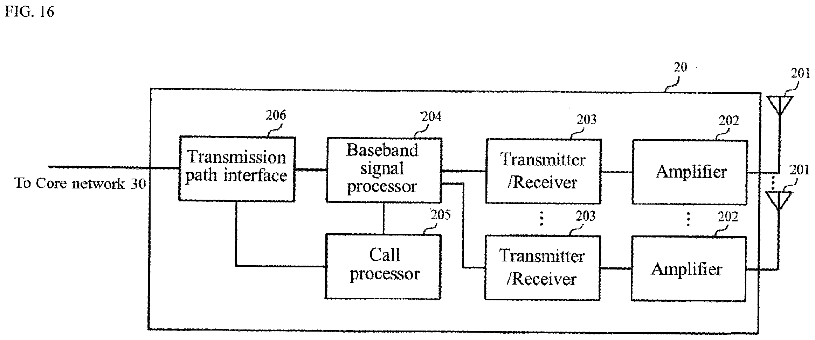

The BS 20 according to one or more embodiments of the present invention will be described below with reference to FIG. 16. FIG. 16 is a diagram illustrating a schematic configuration of the BS 20 according to one or more embodiments of the present invention. The BS 20 may include a plurality of antennas 201, amplifier 202, transceiver (transmitter/receiver) 203, a baseband signal processor 204, a call processor 205 and a transmission path interface 206.

User data that is transmitted on the DL from the BS 20 to the UE 20 is input from the core network 30, through the transmission path interface 206, into the baseband signal processor 204.

In the baseband signal processor 204, signals are subjected to Packet Data Convergence Protocol (PDCP) layer processing, Radio Link Control (RLC) layer transmission processing such as division and coupling of user data and RLC retransmission control transmission processing, Medium Access Control (MAC) retransmission control, including, for example, HARQ transmission processing, scheduling, transport format selection, channel coding, inverse fast Fourier transform (IFFT) processing, and precoding processing. Then, the resultant signals are transferred to each transceiver 203. As for signals of the DL control channel, transmission processing is performed, including channel coding and inverse fast Fourier transform, and the resultant signals are transmitted to each transceiver 203.

The baseband signal processor 204 notifies each UE 10 of control information (system information) for communication in the cell by higher layer signaling (e.g., RRC signaling and broadcast channel). Information for communication in the cell includes, for example, UL or DL system bandwidth.

In each transceiver 203, baseband signals that are precoded per antenna and output from the baseband signal processor 204 are subjected to frequency conversion processing into a radio frequency band. The amplifier 202 amplifies the radio frequency signals having been subjected to frequency conversion, and the resultant signals are transmitted from the antennas 201.

As for data to be transmitted on the UL from the UE 10 to the BS 20, radio frequency signals are received in each antennas 201, amplified in the amplifier 202, subjected to frequency conversion and converted into baseband signals in the transceiver 203, and are input to the baseband signal processor 204.

The baseband signal processor 204 performs FFT processing, IDFT processing, error correction decoding, MAC retransmission control reception processing, and RLC layer and PDCP layer reception processing on the user data included in the received baseband signals. Then, the resultant signals are transferred to the core network 30 through the transmission path interface 206. The call processor 205 performs call processing such as setting up and releasing a communication channel, manages the state of the BS 20, and manages the radio resources.

### (Configuration of User Equipment)

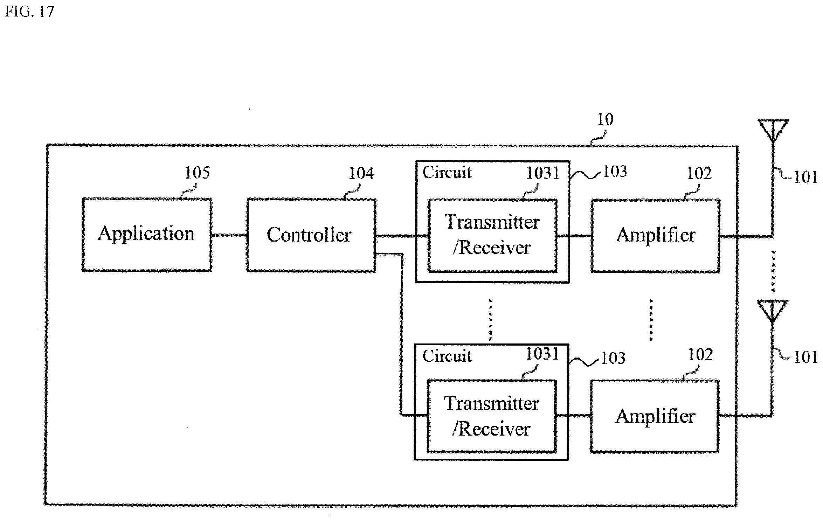

The UE 10 according to one or more embodiments of the present invention will be described below with reference to FIG. 17. FIG. 17 is a schematic configuration of the UE 10 according to one or more embodiments of the present invention. The UE 10 has a plurality of UE antennas 101, amplifiers 102, the circuit 103 comprising transceiver (transmitter/receiver) 1031, the controller 104, and an application 105.

As for DL, radio frequency signals received in the UE antennas 101 are amplified in the respective amplifiers 102, and subjected to frequency conversion into baseband signals in the transceiver 1031. These baseband signals are subjected to reception processing such as FFT processing, error correction decoding and retransmission control and so on, in the controller 104. The DL user data is transferred to the application 105. The application 105 performs processing related to higher layers above the physical layer and the MAC layer. In the downlink data, broadcast information is also transferred to the application 105.

On the other hand, UL user data is input from the application 105 to the controller 104. In the controller 104, retransmission control (Hybrid ARQ) transmission processing, channel coding, precoding, DFT processing, IFFT processing and so on are performed, and the resultant signals are transferred to each transceiver 1031. In the transceiver 1031, the baseband signals output from the controller 104 are converted into a radio frequency band. After that, the frequency-converted radio frequency signals are amplified in the amplifier 102, and then, transmitted from the antenna 101.

### (Another Example)

One or more embodiments of the present invention may be used for each of the uplink and the downlink independently. One or more embodiments of the present invention may be also used for both of the uplink and the downlink in common..

Although the present disclosure mainly described examples of a channel and signaling scheme based on LTE/LTE-A, the present invention is not limited thereto. One or more embodiments of the present invention may apply to another channel and signaling scheme having the same functions as LTE/LTE-A, New Radio (NR), and a newly defined channel and signaling scheme.

Although the present disclosure mainly described examples of channel estimation and CSI feedback scheme based on the CSI-RS, the present invention is not limited thereto. One or more embodiments of the present invention may apply to another synchronization signal, reference signal, and physical channel.

Although the present disclosure mainly described examples of various signaling methods, the signaling according to one or more embodiments of the present invention may be the higher layer signaling such as the RRC signaling and/or the lower layer signaling such as the DCI. Furthermore, the signaling according to one or more embodiments of the present invention may use the MAC-CE.

Although the present disclosure mainly described examples of various signaling methods, the signaling according to one or more embodiments of the present invention may be explicitly or implicitly performed.

Although the present disclosure mainly described examples of the UE including planer antennas, the present invention is not limited thereto. One or more embodiments of the present invention may also apply to the UE including one dimensional antennas and predetermined three dimensional antennas.

In one or more embodiments of the present invention, the resource block (RB) and a subcarrier in the present disclosure may be replaced with each other. A subframe and a symbol may be replaced with each other.

In one or more embodiments of the present invention, beamforming may be applied to the CSI-RS or may not be applied.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Explanation of References]

- 1: Wireless communication system
- 10: User equipment (UE)
- 101: Antenna
- 102: Amplifier
- 103: Circuit
- 1031: Transceiver (transmitter/receiver)
- 104: Controller
- 105: Application
- 106: Switch
- 20: Base station (BS)
- 201: Antenna
- 202: Amplifier
- 203: Transceiver (transmitter/receiver)
- 204: Baseband signal processor
- 205: Call processor
- 206: Transmission path interface

## Claims

1. A wireless communication method comprising:
Transmitting (S101), from a base station, BS, to a user equipment, UE, information indicating a resource designated as a Zero-Power, ZP, Reference Signal, RS, or an Interference Measurement Resource, IMR, dynamically; and
Receiving (S102), with the UE, the ZP RS or the IMR from the BS using the information, wherein
the resource is designated in a unit of one Resource Element, RE,
the information indicates the resource as a bit-map format, and
the resource is designated from predetermined resources used in an 1-port Channel State Information, CSI-RS mapping configuration.

2. The wireless communication method according to claim 1, wherein the transmitting transmits the information using at least one of Downlink Control information, DCI, and a Media Access Control, MAC, Control Element, CE.

3. The wireless communication method according to claim 2, wherein the transmitting transmits the information using Radio Resource control, RRC, signaling.

4. The wireless communication method according to claim 1,
wherein part of a plurality of Resource Blocks, RBs, include the resources, respectively, and
wherein the resources are frequency-multiplexed.

5. The wireless communication method according to claim 4, further comprising:
notifying, with the BS, the UE of frequency-multiplexing information indicating the part of the plurality of RBs,
wherein the receiving receives the ZP RS or the IMR using the frequency-multiplexing information.

6. The wireless communication method according to claim 4, wherein a RB number of the part of the plurality of RBs is either even or odd.

7. The wireless communication method according to claim 4, wherein the notifying notifies the frequency-multiplexing information using RRC signaling.

8. The wireless communication method according to claim 1, wherein the resource is designated in a unit of two REs.

9. The wireless communication method according to claim 8, wherein the information indicates the resource as a bit-map format.

10. The wireless communication method according to claim 8, wherein the resource is designated from 40 resources used in a 2-port CSI-RS mapping configuration where multiple CSI-RS resources are mapped to 2-antenna ports of the BS.

## Patentansprüche

1. Drahtloses Kommunikationsverfahren, umfassend:
dynamisches Übertragen (S101) von Informationen, die eine als ein Nullleistungs-, ZP, Referenzsignal, RS, oder eine Interferenzmessungsressource, IMR, benannte Ressource anzeigen, von einer Basisstation, BS, an ein Benutzerendgerät, UE; und
Empfangen (S102) des ZP RS oder der IMR von der BS mit dem UE unter Verwendung der Informationen, wobei
die Ressource in einer Einheit von einem Ressourcenelement, RE, benannt wird,
die Informationen die Ressource als ein Bitmap-Format anzeigen, und
die Ressource aus vorbestimmten Ressourcen benannt wird, die in einer Kanalzustandsinformationen-, CSI-RS, Zuordnungskonfiguration mit 1 Port verwendet werden.

2. Drahtloses Kommunikationsverfahren nach Anspruch 1, wobei die Informationen beim Übertragen unter Verwendung von mindestens einem aus Downlink-Steuerinformationen, DCI, und einem Medienzugriffssteuerungs-, MAC, Steuerelement, CE, übertragen werden.

3. Drahtloses Kommunikationsverfahren nach Anspruch 2, wobei die Informationen beim Übertragen unter Verwendung von Funkressourcensteuerungs-, RRC, Signalisierung übertragen werden.

4. Drahtloses Kommunikationsverfahren nach Anspruch 1,
wobei ein Teil einer Vielzahl von Ressourcenblöcken, RBs, jeweils die Ressourcen einschließen, und
wobei die Ressourcen frequenzgemultiplext werden.

5. Drahtloses Kommunikationsverfahren nach Anspruch 4, weiter umfassend:
Melden von Frequenzmultiplex-Informationen, die den Teil der Vielzahl von RBs anzeigen, mit der BS an das UE,
wobei das ZP RS oder die IMR beim Empfangen unter Verwendung der Frequenzmultiplex-Informationen empfangen werden.

6. Drahtloses Kommunikationsverfahren nach Anspruch 4, wobei eine RB-Zahl des Teils der Vielzahl von RBs entweder gerade oder ungerade ist.

7. Drahtloses Kommunikationsverfahren nach Anspruch 4, wobei die Frequenzmultiplex-Informationen beim Melden unter Verwendung von RRC-Signalisierung gemeldet werden.

8. Drahtloses Kommunikationsverfahren nach Anspruch 1, wobei die Ressource in einer Einheit von zwei REs benannt wird.

9. Drahtloses Kommunikationsverfahren nach Anspruch 8, wobei die Informationen die Ressource als ein Bitmap-Format anzeigen.

10. Drahtloses Kommunikationsverfahren nach Anspruch 8, wobei die Ressource aus 40 Ressourcen benannt wird, die in einer CSI-RS-Zuordnungskonfiguration mit 2 Ports verwendet werden, wobei mehrere CSI-RS-Ressourcen zu 2 Antennenports der BS zugeordnet werden.

## Revendications

1. Procédé de communication sans fil comprenant :
une transmission (S101), à partir d'une station de base, BS, à un équipement utilisateur, UE, d'informations indiquant une ressource désignée comme un signal de référence, RS, à puissance nulle, ZP, ou une ressource de mesure de brouillage, IMR, de manière dynamique ; et
une réception (S102), avec l'UE, du ZP RS ou de l'IMR à partir de la BS en utilisant les informations, dans lequel
la ressource est désignée dans une unité d'un élément de ressources, RE,
les informations indiquent la ressource comme un format bitmap, et
la ressource est désignée parmi des ressources prédéterminées utilisées dans une configuration de mappage de RS d'informations d'état de canal, CSI, sur un port.

2. Procédé de communication sans fil selon la revendication 1, dans lequel la transmission transmet les informations en utilisant au moins un d'informations de commande en liaison descendante, DCI, et d'un élément de commande, CE, de commande d'accès au support, MAC.

3. Procédé de communication sans fil selon la revendication 2, dans lequel la transmission transmet les informations en utilisant une signalisation de commande de ressources radio, RRC.

4. Procédé de communication sans fil selon la revendication 1,
dans lequel une partie d'une pluralité de blocs de ressources, RB, incluent les ressources, respectivement, et
dans lequel les ressources sont multiplexées en fréquence.

5. Procédé de communication sans fil selon la revendication 4, comprenant en outre :
une notification, avec la BS, à l'UE d'informations de multiplexage en fréquence indiquant la partie de la pluralité de RB,
dans lequel la réception reçoit le ZP RS ou l'IMR en utilisant les informations de multiplexage en fréquence.

6. Procédé de communication sans fil selon la revendication 4, dans lequel un nombre de RB de la partie de la pluralité de RB est soit pair soit impair.

7. Procédé de communication sans fil selon la revendication 4, dans lequel la notification notifie les informations de multiplexage en fréquence en utilisant une signalisation de RRC.

8. Procédé de communication sans fil selon la revendication 1, dans lequel la ressource est désignée dans une unité de deux RE.

9. Procédé de communication sans fil selon la revendication 8, dans lequel les informations indiquent la ressource comme un format bitmap.

10. Procédé de communication sans fil selon la revendication 8, dans lequel la ressource est désignée parmi 40 ressources utilisées dans une configuration de mappage de CSI-RS sur 2 ports où de multiples ressources de CSI-RS sont mappées sur 2 ports d'antenne de la BS.
